# EUROPEAN PATENT APPLICATION

(11) **EP 2 107 511 A1**
(43) Date of publication of application: **07.10.2009**
(21) Application number: 09004334.0
(22) Date of filing: 26.03.2009
(51) Int. Cl.: G06K 19/07, G06K 19/077

(54) **IC card comprising improved electrical contacts**

(30) Priority: 31.03.2008 IT MI20080543
(71) Applicant: Incard SA, 1204 Geneva (CH)
(72) Inventor: Di Sirio, Giovanni, 84100 Salerno (IT); Fontana, Giovanni, 80100 Napoli (IT)
(74) Representative: Botti, Mario

(57) **Abstract**

IC Card (10) comprising:
- a microchip (2) including memory portions (3) storing programs (4a,4b,4c) and
- a plurality of electrical contacts (c1,c2,c3,c4,c5,c6,c7,c8) including a first set (c1,c2,c3,c5,c6,c7) of electrical contacts connected to the microchip (2) for supporting respective and predetermined functions (f1,f2,f3,f5,f6,f7), according to a predetermined ISO 7816 standard that reserves a second set (c4,c8) of electrical contacts for future use. At least one electrical contact (c4) of the second set (c4,c8) is further connected to the microchip (2) and is configured by one or more of said programs (4a,4b,4c) for supporting respective additional functions (f4a,f4b,f4c).

## Description

### Field of Application

The present invention relates to an IC Card comprising
- a microchip including memory portions storing programs and
- a plurality of electrical contacts including a first set of electrical contacts connected to the microchip, for supporting respective and predetermined functions, according to a predetermined ISO 7816 standard that reserves a second set of the electrical contacts for future use.

The present invention also relates to a method for connecting a microchip of an IC Card, including memory portions storing programs, to a plurality of electrical contacts of the IC Card, including a first set of electrical contacts connected to the microchip for supporting respective and predetermined functions, according to a predetermined ISO 7816 standard that reserves a second set of the electrical contacts for future use.

### Prior Art

As it is well known, an IC Card comprises a microchip and a plurality of electrical contacts.

The microchip comprises memory portions, for example a ROM and an EEPROM, storing data and programs.

The electrical contacts are wired on the microchip so that an external device, connected to the electrical contacts, may access the memory portions for data transmission or programs execution.

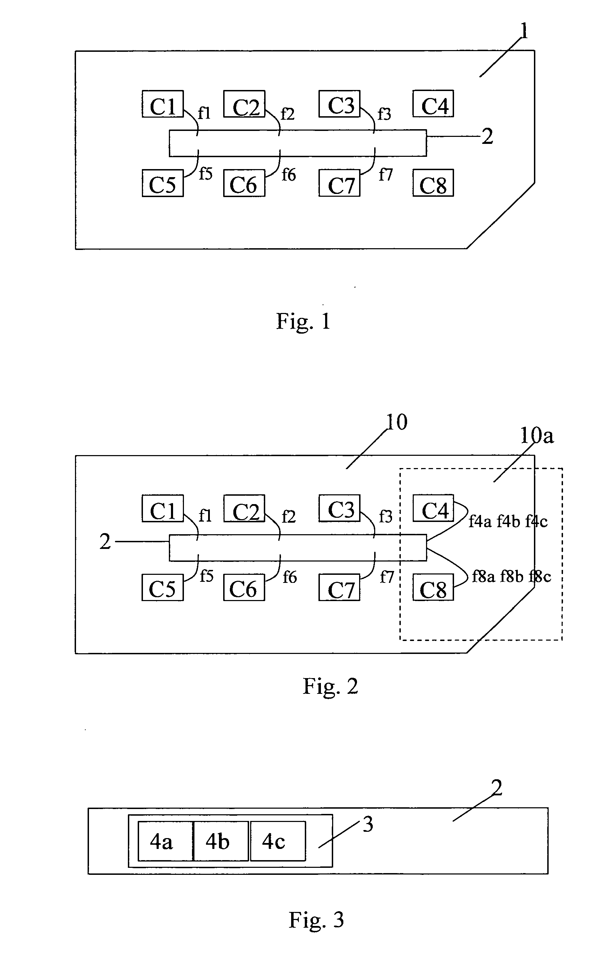

For exemplificative purpose, with reference to figure 1, it is represented an IC Card 1 including a microchip 2 and electrical contacts c1, c2, c3, c4, c5, c6, c7, c8.

The electrical contacts c1, c2, c3, c4, c5, c6, c7, c8 support respective and predetermined functions, according to an ISO 7816 also standard, defining their dimensions, location and number.

More particularly, the ISO 7816 standard provides that a first set s1 of contacts, comprising the electrical contacts c1, c2, c3, c5, c6, c7, is electrical connected to the microchip 2 while a second set s2 of contacts, comprising the electrical contacts c4 and c8, is reserved for future use.

Hereafter a brief description of the functions supported by respective contacts is reported:
- the contact C 1 is also known as Vcc Power connection and is the contact through which operating power is supplied to the microchip 2;
- the contact C2, also referred as RST Reset line, is the contact through which the external device signals to the microchip 2 to initiate a reset sequence of instructions, such instructions being for example stored in the ROM of the IC Card 1;
- the contact C3 or CLK Clock signal is the contact through which a clock signal is provided to the microchip 2. It controls the operation speed and provides a common framework for data communication between the external device and the IC Card;
- the contact C4 is referred as RFU or Reserved for future use because is unused; it is not associated to a specific function from the standard ISO 7816;
- the contact C5, also known as GND Ground line, provides a common electrical ground between the external device and the IC Card 1;
- the C6 contact or Vpp Programming power connection is provided to program the EEPROM of some IC Card;
- the C7 contact or I / O Input/output line provides a half-duplex communication channel between the external device and the IC Card;
- the contact C8 is referred as RFU Reserved for future use as the C4 contact because it is unused.

As it is apparent from the previous description, the electrical contacts c 1, c2, c3, c5, c6, c7 of the first set s1 substantially provides the minimum set of electrical functions for enabling the IC Card 1 to work.

Each electrical contact of the first set s1 is reserved to the respective predetermined function, without which the IC Card 1 cannot work.

For example, if no power is provided through the c1 electrical contact, the IC Card 1 is powered off or, if the c7 electrical contact does not implement the I/= channel, the IC Card 1 is unable to communicate with the external device.

It is also known that some IC Cards provides that one or both the electrical contacts c4 and/or c8 are connected to the microchip 2, in order to implement additional functions, not provided by the ISO 7816 standard.

In other words, one or both the electrical contacts c4 and c8 allow the microchip 2 to receive and/or transmit from/to the external device a specific electronic signal, implementing an additional function. In this case, the microchip 2 and the external device are specifically designed to detect such electronic signal and execute the corresponding additional function.

Even if such IC Cards allow to exploit all the available resources of the IC Card 1, they suffer for the problem that the c4 and c8 electrical contacts are reserved only to the implementation of the corresponding additional functions.

For example, both the c4 and c8 electrical contacts may be used for implementing respective I / O channels for the pre-personalization phase of the IC Card 1, in order to increase the throughput of the data transmission from an initialization device to the IC Card, during pre-personalization. This is advantageous for the pre-personalization phase, since it requires a high speed for data transmission from the initialization device to the IC Card, due to a great amount of data to be transferred.

However, after the pre-personalization phase, the electrical contacts c4 and c8 are substantially unusable for other functions, because they are reserved and limited to the input/output additional functions provided for the pre-personalization phase.

In other words, it is not possible to use the c4 and c8 electrical contacts for another phase, for example for a user phase, and for implementing different function.

More particularly, during the user phase, the security of data is more important than the speed of the data transmission; so it would be preferable to implement a security additional function for the c4 and/or c8 electrical contact instead of the input/output additional function already implemented for the pre-personalization phase.

The problem at the base of the present invention is that of providing an IC Card wherein a set of electrical contacts that, according to the ISO 7816, are reserved for future use, are connected to the microchip of the IC Card for implementing a plurality of additional functions, overcoming the limitation that provides to implement only one predetermined function for a respective electrical contact.

### Summary of the invention

The solution idea on which the present invention is based, is that of connecting at least one electrical contact of a set of (reserved for future use) RSU electrical contacts, to a microchip of the IC Card and storing, inside the memory portions of the microchip, one or more programs for configuring such at least one electrical contact and enabling it to support a respective additional function. Depending on the program executed, the at least one electrical contact implements a specific additional function so that it may be used for different purposes.

According to such idea of solution the problem indicated above is solved by an IC Card comprising:
- a microchip including memory portions storing programs and
- a plurality of electrical contacts including a first set of electrical contacts connected to the microchip for supporting respective and predetermined functions, according to a predetermined ISO 7816 standard that reserves a second set of said electrical contacts for future use,
characterized by the fact that
at least one electrical contact of the second set is further connected to the microchip and is configured by one or more of said programs for supporting respective additional functions.

According to the idea of solution described above, the problem indicated is solved by a method for connecting a microchip of an IC Card, including memory portions storing programs to a plurality of electrical contacts of the IC Card, including a first set of electrical contacts connected to the microchip for supporting respective and predetermined functions according to a predetermined ISO 7816 standard that reserves a second set of said electrical contacts for future use,
characterized by
- connecting at least one electrical contact of the second set to the microchip and
- executing one or more of said programs for configuring said at least one electrical contact in order to support a respective additional function.

Advantageously, according to the present invention, one or more of the electrical contact that are reserved for future use, according to the standard ISO 7816, are connected to the microchip and configured by the programs of the IC Card to be used for implement additional functions.

Advantageously, a program of the IC Card may configure one or both the electrical contacts of the second set for supporting a function specifically useful during a certain phase of the IC Card, for example for increasing the throughput of the transmission of data during the pre-personalization phase or for improving the security during the user phase.

Advantageously, two or more programs of the IC Card may configure one or both the electrical contacts of the second set for supporting two or more different functions during a same phase of the IC Card, for example configuring one or both the electronic contacts only for input functions, when a specific applet is executed during the user phase, and configuring them only for output, when another applet is executed during the same user phase.

Advantageously, according to the IC Card and the method of the invention, the communication between the microchip of the IC Card and the external device intended to communicate with it, is flexible and configurable.

Further characteristics and the advantages of the IC Card and the method according to the present invention will be apparent from the following description of an embodiment thereof, made with reference to the annexed drawings, given for indicative and non-limiting purpose.

### Brief description of drawings

Figure 1: schematically shows, an IC Card including a microchip connected to a plurality of electrical contacts, according to the prior art;
figure 2: schematically shows, an IC Card including a microchip connected to a plurality of electrical contacts, according to the present invention;
figure 3: schematically shows a microchip of the IC Card of figure 2 including a plurality of programs, according to the present invention;

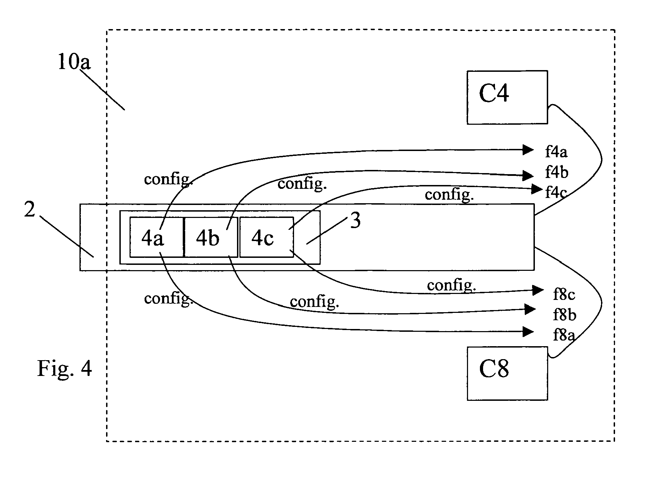

figure 4: schematically shows, a couple of electrical contacts connected to the microchip of figure 3.

### Detailed description

According to the present invention and with reference to figure 2, an IC Card schematically represented and indicated with numeral reference 10 comprises a plurality of electrical contacts c1, c2, c3, c4, c5, c6, c7, c8 and a microchip 2.

The microchip 2 comprises one or more memory portion 3, for example a ROM and an EEPROM which stores programs 4a, 4b, 4c, as schematically represent in figure 3.

The electrical contacts c1, c2, c3, c4, c5, c6, c7, c8 support respective and predetermined functions, according to an ISO 7816 standard, defining also their dimensions, location and number.

More particularly, a first set s1 of contacts comprises the electrical contacts c1, c2, c3, c5, c6, c7, connected to the microchip 2 for supporting respective and predetermined functions f1, f2, f3, f5, f6, f7, according to the ISO 7816 standard. Such standard reserves a second set s2 of contacts, including the electrical contacts c4, c8, for future use.

According to the present invention, at least one electrical contact c4 of the second set s2 is further connected to the microchip 2 and is configured by one or more of the programs 4a, 4b, 4c for supporting respective additional functions f4a, f4b, f4c.

One or more of the additional functions f4a, f4b, f4c are associated to a respective state st1, st2, st3, st4 of the IC Card 1.

For example:
state st 1 may be a test state wherein the microcontroller and the memory portions of the microchip 2 are tested from a test device which connects the microchip 2 via the electrical contacts and transmits to the microchip 2 a plurality of test data;
state st2 may be a pre-personalization state wherein pre-personalization data are transmitted from an initialization device to the IC Card;
state st3 may be a personalization state wherein personal data are stored in the IC Card 1;
state st4 is a final and user state wherein the IC Card 1 is already delivered to a user and it communicates with a terminal for executing applications.

According to the invention, the at least one of said programs 4a, 4b, 4c is stored in a ROM of the microchip 2. In fact, during the test phase, only the ROM is available, since the EEPROM has not been already initialized via the pre-personalization phase. A program in ROM provides to configure an additional function for one or both the electrical contacts c4, c8, for example configuring the c4 electrical contact as input channel and the c8 electrical contact as output channel, in order to improve the communication with the test device.

When the test phase of the IC Card 1 is terminated, the EEPROM may be initialized, executing a copy of data and programs stored in a memory of a base IC Card, used as a model.

Since the initialization of the EEPROM usually involves intensive input operations, due to the transmission of the content of the memory of the base IC Card to a plurality of IC Cards to be initialized, a program in ROM provides to configure the c4 and c8 electrical contacts for input functions only. Advantageously, the c4 and c8 electrical contacts are input channel additional to the c7 electrical contact so that the time involved for the initialization of the EEPROM is noticeably reduced.

In other words, the one or both the electrical contact c4 and c8 may be configured for different functions f4a, f4b, f4c from different programs 4a, 4b, 4c of the ROM. With reference to the example given above, a first program 4a configures the c4 contact for a function f4a of input and the c8 contact for a function f4b output, while a second program 4b configures both the c4 and c8 contacts for the function f4a of input.

At least one of the programs in the EEPROM of the IC Card 1 is a program 4a, 4b, 4c for further configuring the electrical contact c4 and c8 of the second set s2. As explained with reference to the description above, also the electrical contact c4 may be configured for a different function f4a, f4b, f4c from a different program 4a, 4b, 4c of the EEPROM.

According to the invention, one or both the electrical contact c4, c8 of the second set s2 are further connected to the microchip 2 and configured by the programs 4a, 4b, 4c for supporting respective additional functions f4a, f4b, f4c; f8a, f8b, f8c.

More particularly, the electrical contacts c8 may be configured for supporting an additional function f8a, different from the additional function f4a supported by the other electrical contacts c4 or it may be configured for supporting a same additional function.

The present invention also relates to a method for connecting a microchip 2 of an IC Card 1, including a memory portions 3 storing programs 4a, 4b, 4c, to a plurality of electrical contacts c1, c2, c3, c4, c5, c6, c7, c8 of the IC Card 1.

A first set s1 of the contacts comprises electrical contacts c1, c2, c3, c5, c6, c7 connected to the microchip 2, for supporting respective and predetermined functions f1, f2, f3, f5, f6, f7, according to a predetermined ISO 7816 standard that reserves a second set s2 of contacts for future use. The second set s2 of contacts comprises the electrical contacts c4, c8.

The method provides a phase for connecting at least one electrical contact c4 of the second set s2 to the microchip 2 and a phase for executing one or more of the programs 4a, 4b, 4c for configuring the at least one electrical contact c4. The configuration of the electrical contact c4 provides that the electrical connection between the electrical contact c4 and the microchip supports an additional function f4a, f4b, f4c. The additional function may be one of the function defined by the ISO 7816 with reference to the first set s1 of electrical contacts c1, c2, c3, c5, c6, c7.

According to the method of the invention, both the electrical contact c4 and c8 of the second set s2 may be connected to the microchip 2 and the programs 4a, 4b, 4c executed for configuring both the electrical contacts c4 and c8, in order to support respective additional functions f4a, f4b, f4c, f8a, f8b, f8c.

Advantageously, the IC Card and the method of the present invention avoids that an electrical contacts c4 and c8 available for further connecting the microchip is limited for a single predetermined use. In fact, the software stored inside the IC Card provides that c4 and c8 electrical contacts, hard wired to the microchip, may receive and transmit a different electric signal, to be used for a different function.

For example, when the IC Card is connected to a first external device, a first software stored in the IC Card and intended to manage a communication with the first device, provides to configure the c4 and/or the c8 electrical contact for receiving a first electrical signal, implementing a function supported by such first device.

At the same time, when the IC Card is connected to a second external device, a second software stored in the IC Card and intended to manage a communication with the second device, provides to configure the c4 and/or the c8 electrical contact for receiving a second electrical signal, implementing a function supported by such first device.

The first and second electrical signal may be different. For example, without limiting the scope of the present invention, the first signal may be a clock signal while the second signal may be an input signal. Both the first and the second signal may be supported by a same electrical contact, due to the execution of corresponding programs that configures the electrical contact.

Hereafter an embodiment of the present invention is briefly reported. According to such embodiment, the second set s2 of electrical contacts c4 and c8 of the IC Card 1 are configured as input/output analogical electrical contacts c4 and c8.

According to this embodiment, a digital file stored in a memory of the IC Card 1, for example an mp3 file, may be converted in analogical format, from a converter stored inside the IC Card 1 itself, and transmitted to the input/output analogical electrical contact c4 and c8 for reproduction.

More particularly, according to this embodiment, it is avoided a transmission of the digital file from the IC Card to the player, since the player is inside the IC Card itself. In fact the player is substantially substituted by the application inside the IC Card, enabled to execute the D(igital) to A(nalogical) conversion and to redirect the output of such conversion to the input/output analogical electrical contacts c4 and c8, for reproduction.

Advantageously, the mp3 file is kept secure inside the IC Card, for example in crypted format, and cannot be copied because it is converted inside the IC Card itself and directly transmitted to the input/output analogical electrical contacts c4 and c8.

Moreover, the mp3 may be substantially heard through a simple reader provided only for power, clock signal, and earphones.

An IC card providing such input/output analogical electrical contacts c4 and c8 is also advantageous for the fact that it is portable and connectable to a plurality of reader device, rendering very easy to convert and reproduce the digital file, without compromising security.

As already stated, the input output analogical electrical contacts c4 and c8, may be reconfigured for implementing a different function. For example, when an applet associated to the conversion of the mp3 file is stopped, another program may be executed for the reconfiguration of the c4 and c8 electrical contacts.

Advantageously, according to the present invention, one or more of the electrical contacts that, according to the standard ISO 7816, are reserved for future use, are connected to the microchip and configured by the programs of the IC Card to be used for different functions.

Advantageously, a program of the IC Card may configure one or both the electrical contacts of the second set for supporting a function specifically useful during a certain phase of the IC Card, for example for increasing the throughput of the transmission of data during the pre-personalization phase and for improving the security during the user phase.

Advantageously, two or more programs of the IC Card may configure one or both the electrical contacts of the second set for supporting two or more different functions during a same phase of the IC Card, for example configuring one or both the electronic contacts only for input when a specific applet is executed during the user phase and configuring them only for output when another applet is executed during the user phase.

Advantageously, according to the IC Card and the method of the invention, the interaction between the microchip of the IC Card and an external device intended to communicate with it, is more flexible and configurable.

## Claims

1. IC Card (10) comprising
- a microchip (2) including memory portions (3) storing programs (4a, 4b, 4c) and
- a plurality of electrical contacts (c 1, c2, c3, c4, c5, c6, c7, c8) including a first set (s1) of electrical contacts (c1, c2, c3, c5, c6, c7) connected to the microchip (2) for supporting respective and predetermined functions (f1, f2, f3, f5, f6, f7), according to a predetermined ISO 7816 standard that reserves a second set (s2) of electrical contacts (c4, c8) for future use,
**characterized by** the fact that
at least one electrical contact (c4) of the second set (c4, c8) is further connected to the microchip (2) and is configured by said programs (4a, 4b, 4c) for supporting additional functions (f4a, f4b, f4c).

2. IC Card (10) according to claim 1 **characterized by** the fact that one or more of said additional functions (f4a, f4b, f4c) are associated to a respective state (s1, s2, s3, s4) of the IC Card (10).

3. IC Card (10) according to claim 1 **characterized by** the fact that said microchip (2) comprises a ROM including at least one of said programs (4a, 4b, 4c).

4. IC Card (10) according to claim 1 **characterized by** the fact that said microchip (2) comprises an EEROM including at least one of said programs (4a, 4b, 4c).

5. IC Card (10) according to claim 3 **characterized by** the fact that said electrical contact (c4) is configured for a different function (f4a, f4b, f4c) from a different program (4a, 4b, 4c) of said ROM.

6. IC Card (10) according to claim 1 **characterized by** the fact that said electrical contact (c4) is configured for a different function (f4a, f4b, f4c) from a different program (4a, 4b, 4c) of said EEPROM.

7. IC Card (10) according to any previous claim **characterized by** the fact that both the electrical contact (c4, c8) of said second set are further connected to the microchip (2) and configured by said programs (4a, 4b, 4c) for supporting respective additional functions (f4a, f4b, f4c; f8a, f8b, f8c).

8. IC Card (10) according to claim 7 **characterized by** the fact that one of said electrical contacts (c4) is configured for supporting an additional function (f8a) different from the additional function (f4a) supported by the other electrical contacts (c8).

9. IC Card (10) according to claim 7 **characterized by** the fact that one of said electrical contacts (c4) is configured for supporting a same additional function (f4a) of the other electrical contacts (c8).

10. Method for connecting a microchip (2) of an IC Card (10), including memory portions (3) storing programs (4a, 4b, 4c), to a plurality of electrical contacts (c1, c2, c3, c4, c5, c6, c7, c8) of the IC Card (10), including a first set (c1, c2, c3, c5, c6, c7) of electrical contacts connected to the microchip (2) for supporting respective and predetermined functions (f1, f2, f3, f5, f6, f7), according to a predetermined ISO 7816 standard that reserves a second set (c4, c8) of said electrical contacts for future use,
**characterized by**
- connecting at least one electrical contact (c4) of the second set (c4, c8) to the microchip (2) and
- executing one or more of said programs (4a, 4b, 4c) for configuring said at least one electrical contact (c4) in order to support a respective additional function (f4a, f4b, f4c).
